# EUROPÄISCHE PATENTSCHRIFT

(11) **EP 1 222 411 B1**
(45) Veröffentlichungstag und Bekanntmachung des Hinweises auf die Patenterteilung: **30.06.2004**
(21) Anmeldenummer: 00967418.5
(22) Anmeldetag: 19.10.2000
(51) Int. Cl.: F16F 15/26

(54) **AUSGLEICHSWELLENEINHEIT FÜR HUBKOLBENMASCHINEN**
COMPENSATING SHAFT ASSEMBLY FOR PISTON ENGINES
ENSEMBLE D'ARBRES DE COMPENSATION POUR MOTEURS A PISTON ALTERNATIF

(30) Priorität: 19.10.1999 AT 72899 U
(43) Veröffentlichungstag der Anmeldung: 17.07.2002
(73) Patentinhaber: Magna Steyr Powertrain AG & Co KG, 8502 Lannach (AT)
(72) Erfinder: STÜCKLER, Johann, A-8081 Heiligenkreuz am Waasen (AT)
(74) Vertreter: Kovac, Werner
(86) Internationale Anmeldenummer: PCT/AT2000/000274
(87) Internationale Veröffentlichungsnummer: WO 2001/029447

(56) Entgegenhaltungen:
- DE-A- 19 851 547
- DE-B- 1 253 946
- US-A- 4 741 303
- US-A- 5 253 547

## Beschreibung

Die Erfindung betrifft eine Ausgleichswelleneinheit für Hubkolbenmaschinen, bestehend aus einer in einem Ausgleichsgehäuse gelagerten Ausgleichswelle und mindestens einem darauf befestigten Ausgleichsgewicht. Ausgleichswellen haben den Zweck, die bei Hubkolbenmaschinen entstehenden Massenkräfte und -momente auszugleichen. Sie werden vorzugsweise in hochtourigen, leichten Verbrennungskraftmaschinen eingesetzt, insbesondere paarweise in Motoren mit vier Zylindern in Reihe zum Ausgleich der Massenkräfte zweiter Ordnung. Sie werden in der Regel von der Kurbelwelle angetrieben, im letzteren Anwendungsfall mit der doppelten Drehzahl, also bis über 10,000 Touren.

Das bedeutet extreme Anforderungen an Präzision und Lagerung. Zugleich sollen sie aber möglichst leicht und billig in Herstellung und Montage sein und im Kurbelgehäuse möglichst wenig Bauraum beanspruchen. Grundsätzlich sind zwei verschiedene Bauweisen möglich: Entweder ist die Ausgleichswelle mit ihren Ausgleichsgewichten einteilig ausgeführt oder sie ist "gebaut", die Ausgleichsgewichte werden auf der fertigen Welle befestigt.

Erstere ist etwa in der DE 37 05 346 A beschrieben, zweitere in der US 4,425,821. Die einteilige Bauweise ist sehr aufwendig, erfordert höchste Genauigkeit und führt bei Wellen mit mehr als zwei Lagern zu großen Lagerdurchmessern, die bei den hohen Drehzahlen schmiertechnisch nicht zu beherrschen sind. Aus eben diesen Gründen verbieten sich auch Wälzlager. Gebaute Ausgleichswellen haben demgegenüber vor allem den Vorteil, kleinere Lagerdurchmesser zu erlauben, wobei allerdings für ausreichende Steifigkeit der Welle zu sorgen ist. Ausserdem können auch bei mehr als zwei Lagern einteilige Gehäuse mit rundum geschlossenen Lagerbüchsen verwendet werden. Es ist jedoch schwierig, höchste Präzision, zuverlässige Befestigung und ausreichende Unwucht bei begrenzten Aussenmaßen zu erreichen. So ist etwa bei der Klemmverbindung der US 4,425,821 Präzision, minimaler Aussendurchmesser und Festigkeit der Verbindung zweifelhaft.

Es ist daher Ziel der Erfindung, eine gebaute Ausgleichswelle so zu gestalten, daß sie bei minimalen Herstellungskosten den Forderungen nach höchster Präzision, zuverlässiger Befestigung und minimalen Aussenabmessungen genügt.

Erfindungsgemäß ist das Ausgleichsgewicht im Wesentlichen ein zylindrischer Ring mit zwei achsnormalen Stirnflächen und mit einem Ausschnitt im längsmittigen Bereich, sodaß das Ausgleichsgewicht aus zwei an die beiden Stirnflächen anschließenden Ringteilen und einem dazwischenliegenden Segmentteil besteht. Man denke an Hosenträger. Die randseitigen geschlossenen Ringe nehmen die Zugkraft auf, bieten eine passgenaue feste Verbindung und belasten die Welle in der Nähe ihrer Lagerung, sodaß keine Biegebelastung entsteht. Sie können im einfachsten Fall aufgeschrumpft sein. Der Ausschnitt im längsmittigen Bereich - er erstreckt sich praktisch über den halben Umfang - erlaubt eine große Massenexzentrizizät bei geringem Aussendurchmesser. Der Segmentteil umgibt die andere Hälfte des Umfanges. Er liegt an der Zugzone der auf Biegung beanspruchten Welle an und erhöht so deren Steifigkeit erheblich. Diese Verformungsbehinderung durch Erhöhung des Widerstandsmomentes kommt der Welle (verminderte Biegespannungen) und den Lagern (besseres Tragprofil durch geringere Durchbiegung) zugute. Somit sind die Wellen mit kleinerem Durchmesser ausführbar.

Wenn die so erreichbare Massenexzentrizizät nicht ausreicht, kann bei nur geringer Vergrößerung des Aussendurchmessers das Ausgleichsgewicht auf der dem Ausschnitt abgewandten Seite eine die exzentrische Masse vergrößernde Verdickung aufweisen (Anspruch 2).

In einer vorteilhaften Ausgestaltung bildet mindestens eine der Stirnflächen des Ausgleichsgewichtes gemeinsam mit einer bearbeiteten Fläche des Ausgleichsgehäuses ein Spurlager (Anspruch 3). Damit ist ohne zusätzliche Teile auch ein Spurlager geschaffen, das die genaue achsiale Positionierung sicherstellt.

Weiters liegt es bei in einem einteiligen Ausgleichsgehäuse aus Leichtmetall gelagerter Ausgleichswelle im Rahmen der Erfindung, daß die Lagerflächen des Gleitlagers im Ausgleichsgehäuse selbst ausgebildet sind (Anspruch 4). So wird mit geringstem Aufwand eine besonders genaue Lagerung erreicht. Die Lagerfläche ist eine ununterbrochene Zylinderfläche, die mit höchster Genauigkeit direkt im Leichtmetallgehäuse bearbeitet wird. Es hat sich gezeigt, daß wegen des kleinen Durchmessers der Welle im Bereich rein hydrodynamischer Schmierung bleibt.

In einer vorteilhaften Ausführungsform ist das Ausgleichsgewicht mit der Ausgleichswelle durch eine Energiestrahlschweißnaht im Ausschnitt verbunden, die beiderseits an der Verschneidung der Ausschnittebene mit der Ausgleichswelle hergestellt ist (Anspruch 5). So wird eine besonders schnelle und zuverlässige Verbindung hergestellt, die bei gegenüberliegenden vorzugsweise mit einem Laser hersgestellten Schweißnähten auch vollkommen verzugsfrei ist.

In einer anderen vorteilhaften Ausführungsform weist die Ausgleichswelle mindestens eine erste Querbohrung auf, die mit mindestens einer zweiten Querbohrung des Ausgleichsgewichtes fluchtet, welche beide Bohrungen ein im wesentlichen zylindrisches Verbindungselement aufnehmen (Anspruch 6), welches eine Schraube (Anspruch 7), ein Passstift (Anspruch 8), eine Spannhülse (Anspruch 9) oder ein Niet (Anspruch 10) sein kann.

Im Folgenden wird die Erfindung anhand von Abbildungen beschrieben und erläutert. Es stellen dar:
- Fig. 1:: Ein Anordnungsschema einer erfindungsgemäßen Einheit,
- Fig. 2:: Eine axonometrische Ansicht eines Ausgleichsgehäuses als Teil der erfindungsgemäßen Einheit in Draufsicht,
- Fig. 3:: Einen Längsschnitt durch eine erfindungsgemäßen Einheit in einer ersten und zweiten Ausführungsform,
- Fig. 4:: Einen Querschnitt nach III-III und IV-IV in Fig. 3,
- Fig. 5:: Einen Längsschnitt durch eine erfindungsgemäßen Einheit in einer dritten und vierten Ausführungsform,
- Fig. 6:: Einen Querschnitt nach V-V und VI-VI in Fig. 5,
- Fig. 7:: Einen Längsschnitt durch eine erfindungsgemäßen Einheit in einer fünften und sechsten Ausführungsform,
- Fig. 8:: Einen Querschnitt nach VII-VII und VIII-VIII in Fig. 7,
- Fig. 9:: Eine axonometrische Ansicht eines erfindungsgemäßen Aus gleichsgewichtes, und
- Fig. 10:: Einen Querschnitt nach X-X in Fig.2, vergrößert.

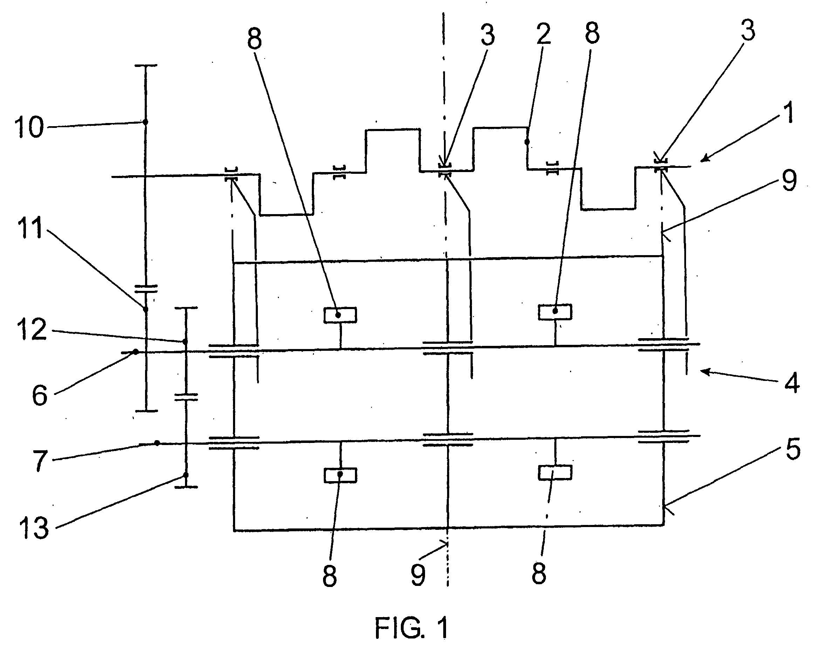

In Fig. 1 ist die Hubkolbenmaschine 1 nur durch ihre Kurbelwelle 2 und deren Grundlager 3 versinnbildlicht. Die Grundlager 3 stehen stellvertretend für den gesamten Motorblock, der sowohl in Tunnelbauweise als auch mit freien Lagerbrücken ausgeführt sein kann. Die unter der Kurbelwelle 2 am Motorblock befestigte Massenausgleichsvorrichtung ist allgemein mit 4 bezeichnet. Sie besteht aus einem Ausgleichsgehäuse 5 und zwei darin gegenläufig rotierenden Ausgleichswellen 6, 7 mit Ausgleichsgewichten 8. Strichliert sind die Normalebenen 9 durch die Grundlager 3 angedeutet, in ihnen liegen auch die Lager der Massenausgleichsvorrichtung 4. Die Ausgleichswellen 6, 7 werden von einem mit der Kurbelwelle 2 drehfest verbundenen Zahnrad 10 über ein Antriebszahnrad 11 angetrieben, die Synchronräder 12, 13 sorgen für gegenläufig gleiche Drehzahl.

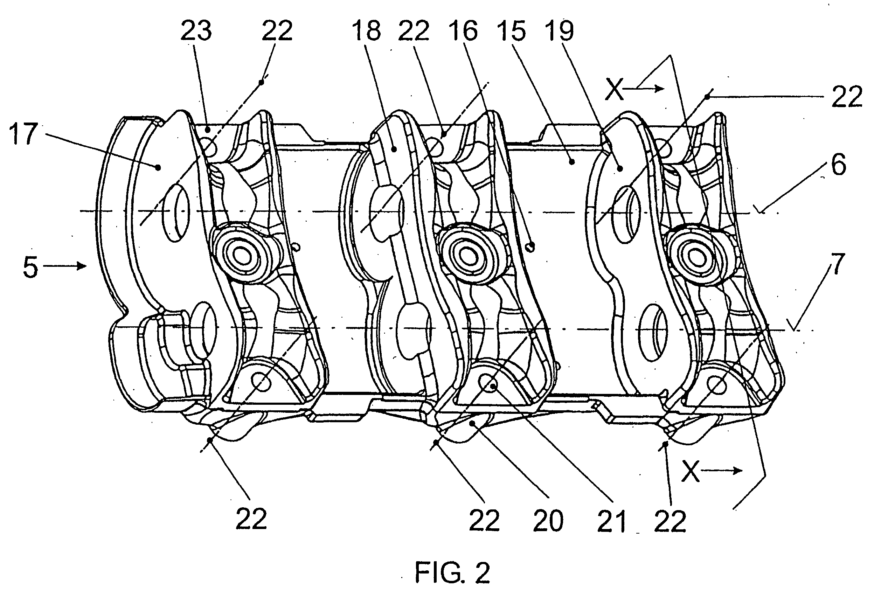

Fig. 2 zeigt das Ausgleichsgehäuse 5, das im dargestellten Ausführungsbeispiel ein Gußteil aus Leichtmetall ist. Es besteht aus einer Bodenschale 15 mit Ölabflußlöchern 16 und einer Anzahl von Lagerbrücken 17, 18, 19. Jede Lagerbrücke weist auf ihren beiden Seiten einen Anguß 20 mit einer vertikalen Bohrung 21 für je einen nur angedeuteten Schraubbolzen 22 auf, mit dem das Ausgleichsgehäuse 5 am Motorblock angeschraubt wird. Dazu sind in der Umgebung der Bohrungen 21 Aufstandsflächen 23 gebildet. Über diese Aufstandsflächen ist das montierte Ausgleichsgehäuse mit den entsprechenden Stellen im Motorblock verbunden, welche sich in einer gemeinsamen Normalebene 9 mit den Lagerbrücken 17, 18, 19 befindet. Die Verbindung erfolgt, nicht eigens dargestellt, entweder mit den den Lagerstuhl des Grundlagers bildeten Querrippen des Motorblockes oder mit den Lagerbrücken des Grundlagers oder, im Falle einer Tunnelkonstruktion, an diesem.

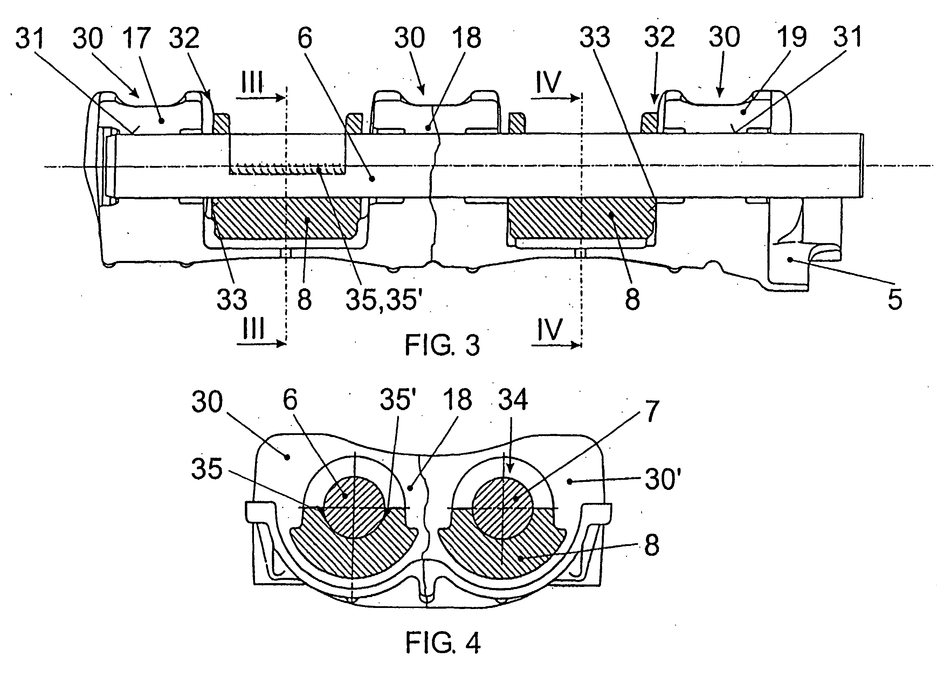

Fig. 3 ist ein vertikaler Längsschnitt durch die erste Ausgleichswelle 6, die wegen der Besonderheiten der beschriebenen Bauweise eine einfache, rein zylindrische Welle konstanten Durchmessers sein kann. Die drei Lagerbrücken 17, 18, 19 bilden Gleitlager 30 für die Lagerung der Ausgleichswelle 6. Sie weisen die Besonderheit auf, dass in dem Grundmaterial des Ausgleichsgehäuses 5 bzw der Lagerbrücken, Lagerflächen 31 für die radiale Lagerung bearbeitet sind, ohne dass eine eigene Lagerbüchse erforderlich wäre. An den beiden äußeren Lagerbrücken 17, 19 sind Spurlager 32 ausgebildet, wozu ebenfalls am Grundmaterial fein bearbeitete Lagerflächen 33 vorgesehen sind.

Auf den Ausgleichswellen 6, 7 können die Ausgleichsgewichte 8 in verschiedener Weise befestigt sein. Dazu sind in den Längschnitten der Figuren 3,5,7 jeweils zwei verschiedene Befestigungsarten dargestellt und entsprechend in den Figuren 4,6 und 8 die beiden Ausgleichswellen 6,7 jeweils der einen und der anderen Ausführungsform zugeordnet. Es versteht sich aber von selbst, dass man normalerweise für beide Ausgleichswellen und sämtliche Ausgleichsgewichte dieselbe Art der Befestigung wählen wird.

In Fig.3, auf der rechten Seite ist das Ausgleichsgewicht 8 einfach auf die Ausgleichswelle 6 aufgeschrumpft (34), auf der linken Seite ist sie mittels zweier diametral gegenüber angeordneter und längsgerichteter Laserschweissnähte 35,35' verbunden. Bei dieser Anordnung der Schweissnähte und bei Verwendung eines engfokussierten Hochenergiestrahles bleibt die Ausgleichswelle 6 verzugsfrei.

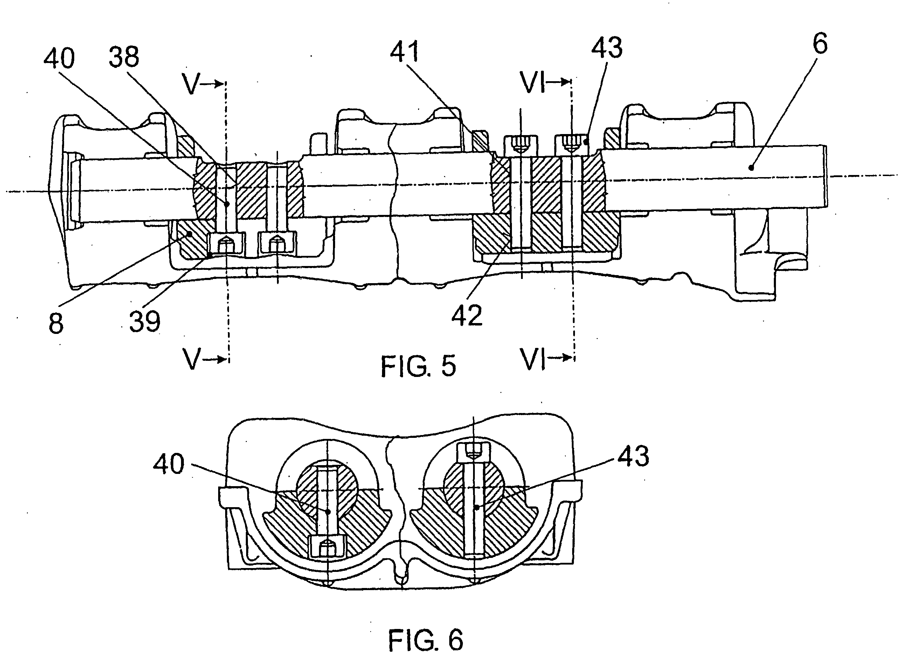

Fig. 5 und Fig. 6 zeigen zwei weitere Arten der Verbindung zwischen Ausgleichswelle 6 und Ausgleichsgewicht 8. Auf der linken Seite ist in der Ausgleichswelle 6 eine Gewindebohrung 38 und im Ausgleichsgewicht 8 eine Passbohrung mit Einsenkung 39 vorgesehen, durch die eine oder zwei Passschrauben 40 von der Seite des Ausgleichsgewichtes aus eingeschraubt sind. Auf der rechten Seite ist es umgekehrt: durch eine Bohrung 41 in der Ausgleichswelle 6 und eine Gewindebohrung 42 im Ausgleichsgewicht 8, werden Passschrauben 43 eingeschraubt.

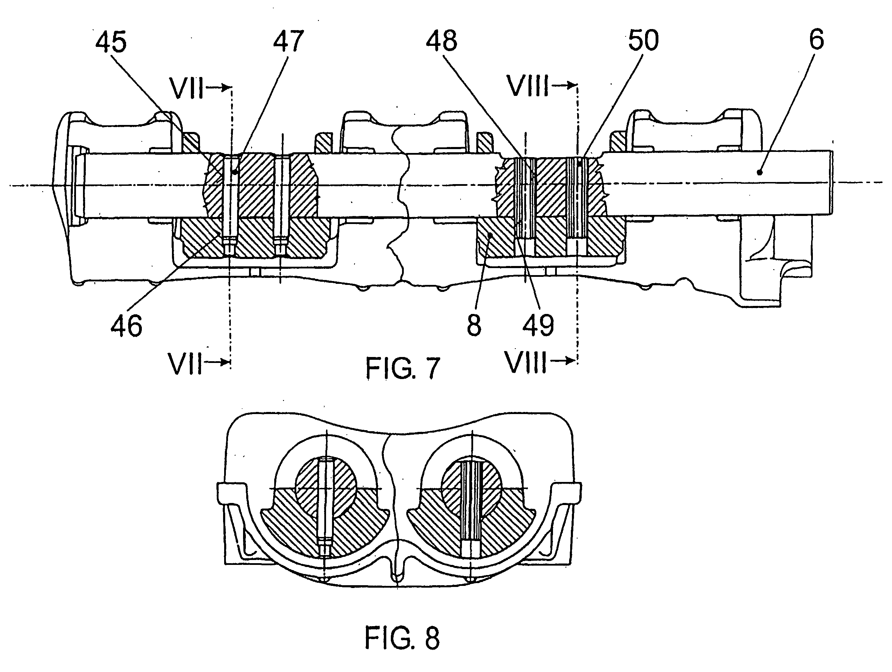

In Fig.7 und 8 erfolgt die Verbindung über eine Passbohrung 45 in der Ausgleichswelle 6 und eine vorzugsweise abgestufte Passbohrung 46 im Ausgleichsgewicht 8, in die bei der Montage mindestens ein Passstift 47 (hier sind es zwei) eingetrieben wird. Auf der rechten Seite sind zwei Passbohrungen 48, 49 gleichen Durchmessers vorgesehen, in die bei der Montage zwei Spannbuchsen 50 gesteckt werden.

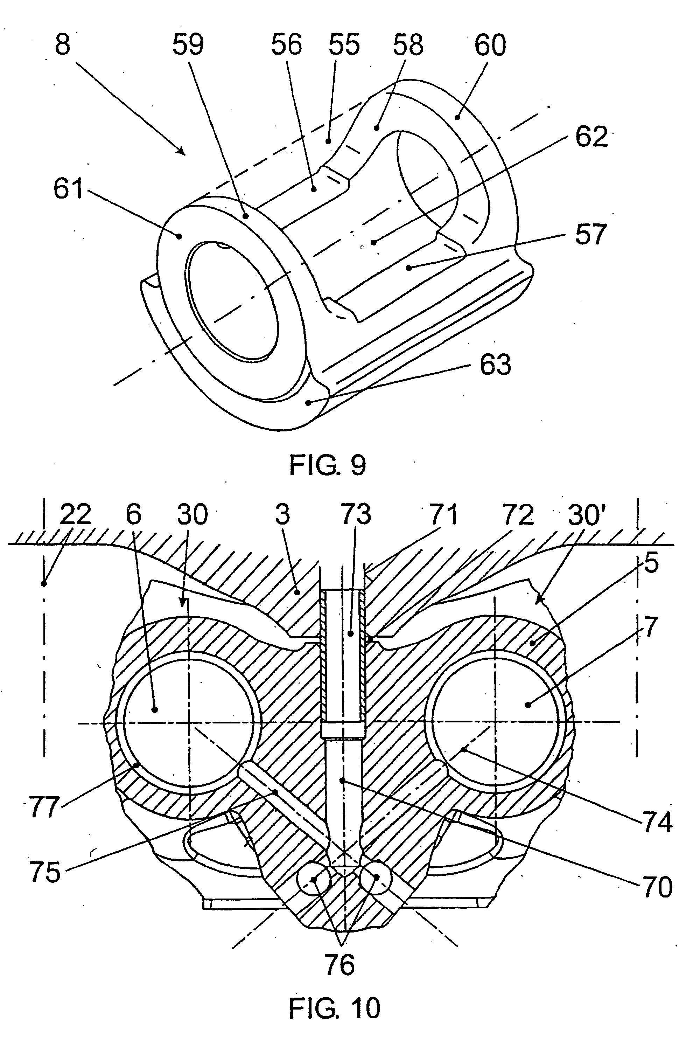

Fig. 9 zeigt das Ausgleichsgewicht 8 im Detail. Seine Grundform ist die eines zylindrischen Ringes bzw eines hohlen Zylinders mit dicker Wand, was strichliert angedeut ist. Er kann auf verschiedene Weise gefertigt sein, etwa geschmiedet oder aus Feinguß. Dessen ungeachtet wird bei der Erläuterung der Form von einem laternenartigen Ausschnitt 55 gesprochen, der über einen Teil der Länge und ungefähr um den halben Umfang erfolgt. Der Ausschnitt 55 wird von zwei Ausschnittebenen 56, 57 und von seitlichen Ausschnittflächen 58 begrenzt. Die Ausschnittebenen 56, 57 sind dann wesentlich, wenn die Verbindung mit der Welle mittels Laserschweissung erfolgt, dann kommt die Schweissnaht an der Schnittlinie der Ausschnittebenen 56, 57 mit dem Zylinder der Ausgleichswelle 6 zu liegen. In Längsrichtung beiderseits an den Ausschnitt 55 anschließend bleiben zwei Ringteile 59, 60 über, die geschlossene Ringe sind und die Fliehkräfte und im Falle einer Schrumpfverbindung auch die die Schrumpfspannung erzeugenenden Umfangskräfte aufnehmen. Die Ringteile 59, 60 haben jeweils an der Außenseite eine Stirnfläche 61 welche im Zusammenwirken mit der Lagerfläche 33 der Lagerbrücke 17 ein Spurlager 32 bildet. Der Ausschnitt 55 erstreckt sich ungefähr über einen Halbkreis, am restlichen Halbkreis befindet sich ein Segmentteil 62, der die exzentrische Masse bildet. Dadurch, dass sich zwischen den Ringteilen 59, 60 an der Seite des Ausschnittes 55 überhaupt kein Material befindet, ist mit nur geringer Dicke des Segmentteiles 62 ein hohe Exzentrizität zu erreichen. Wenn das nicht genügt, kann zusätzlich noch eine Verdickung 63 ausgebildet sein.

Fig. 10 zeigt hauptsächlich die Ölversorgung. Das Grundlager 3 und damit der gesamte Motorblock sind nur angedeutet. Das Grundlager selbst befindet sich über der Abbildung und ist nicht mehr zu sehen. Das Ausgleichsgehäuse 5 ist auch nur teilweise dargestellt und die Schraubenbolzen 22, mit denen es am Motorblock bzw Grundlager 3 angeschraubt ist, sind nur durch eine strichpunktierte Linie angedeutet. Der Schnitt ist in der Lagerbrücke 19 (Fig.2) geführt. Im Ausgleichsgehäuse 5 befindet sich ein erster vertikaler Schmierkanal 70, er ist parallel zu den Schraubenbohrungen 21 (Fig.2) und kann in einer Aufspannung mit diesen gebohrt werden. Im Grundlager 3 bzw Motorblock ist ein zweiter vertikaler Schmierkarial 71 vorgesehen, der mit dem ersten fluchtet, aber in einem kleinen Abstand 72 endet. Dadurch sind etwa wärmedehnungsbedingte Verschiebungen so aufgefangen, dass sie zu keiner Verspannung des Ausgleichsgehäuses 5 führen können. Verbunden sind die beiden Schmierkanäle 70, 71 durch eine eingesteckte Hülse 73. Der erste vertikale Schmierkanal 70 kann als Sackloch ausgeführt sein, führt aber unter die Ebene in der die beiden Ausgleichswellen 6, 7 sind. Die Verbindung zu den Lagern 30 wird durch wieder aufwärtsführende Stichbohrungen 74, 75 hergestellt. Sie schneiden den Schmierkanal 70 und können von unten in das Ausgleichsgehäuse 5 gebohrt werden. Sie sind nach außen durch eingepreßte Kugeln 76 verschlossen und münden in einer Ölverteilnuß 77 des Gleitlagers 30.

## Patentansprüche

1. Ausgleichswelleneinheit für Verbrennungskraftmaschinen, bestehend aus mindestens einer in einem Ausgleichsgehäuse (5) gelagerten Ausgleichswelle (6,7) und mindestens einem auf der Ausgleichswelle befestigten Ausgleichsgewicht (8), **dadurch gekennzeichnet, dass** das Ausgleichsgewicht (8) im Wesentlichen ein zylindrischer Ring mit zwei achsnormalen Stirnflächen (61) und mit einem Ausschnitt (55) im längsmittigen Bereich ist, sodaß das Ausgleichsgewicht aus zwei an die beiden Stirnflächen (61) anschließenden Ringteilen (60,61) und einem dazwischenliegenden Segmentteil (62) besteht.

2. Ausgleichswelleneinheit nach Anspruch 1, **dadurch gekennzeichnet, dass** das Ausgleichsgewicht (8) auf der dem Ausschnitt (55) abgewandten Seite eine die exzentrische Masse vergrößernde Verdickung (63) aufweist.

3. Ausgleichswelleneinheit nach Anspruch 1, die im Ausgleichsgehäuse (5) in Gleitlagern (30) gelagert ist, **dadurch gekennzeichnet, dass** mindestens eine der Stirnflächen (61) des Ausgleichsgewichtes (8) gemeinsam mit einer bearbeiteten Fläche (33) des Ausgleichsgehäuses (5) ein Spurlager (32) bildet.

4. Ausgleichswelleneinheit nach Anspruch 3, wobei die Ausgleichswelle in einem Ausgleichsgehäuse (5) aus Leichtmetall gelagert ist, **dadurch gekennzeichnet, dass** die Lagerflächen (31) des Gleitlagers im Ausgleichsgehäuse (5) selbst ausgebildet sind.

5. Ausgleichswelleneinheit nach Anspruch 1, **dadurch gekennzeichnet, dass** das Ausgleichsgewicht (8) mit der Ausgleichswelle (6,7) durch eine Hochenergieschweissnaht (35,35') im Ausschnitt (55) verbunden ist, die beiderseits an der Verschneidung der Ausschnittebene (56,57) mit der Ausgleichswelle (6,7) hergestellt ist.

6. Ausgleichswelleneinheit nach Anspruch 1, **dadurch gekennzeichnet, dass** die Ausgleichswelle (6,7) mindestens eine erste Querbohrung (38;41;45;48) aufweist, die mit mindestens einer zweiten Querbohrung (39;42;46;49) des Ausgleichsgewichtes (8) fluchtet, welche beide Bohrungen ein im Wesentlichen zylindrisches Verbindungselement (40;43;47;50) aufnehmen.

7. Ausgleichswelleneinheit nach Anspruch 6, **dadurch gekennzeichnet, dass** das zylindrische Verbindungselement eine Schraube (40) ist.

8. Ausgleichswelleneinheit nach Anspruch 6, **dadurch gekennzeichnet, dass** das zylindrische Verbindungselement ein Passstift (47) ist.

9. Ausgleichswelleneinheit nach Anspruch 6, **dadurch gekennzeichnet, dass** das zylindrische Verbindungselement eine Spannhülse (50) ist.

10. Ausgleichswelleneinheit nach Anspruch 6, **dadurch gekennzeichnet, dass** das zylindrische Verbindungselement ein Niet ist.

## Claims

1. A balance shaft unit for internal combustion engines, consisting of at least one balance shaft (6, 7) supported in a balance casing (5) and at least one counterweight (8) fastened to the balance shaft, **characterized in that** the counterweight (8) is essentially a cylindrical ring with two end surfaces (61) normal to the axis and with a cutout (55) in the longitudinally central region, so that the counterweight consists of two ring parts (60, 61) abutting the two end surfaces (61) and an intermediate segmental part (62).

2. The balance shaft unit as claimed in claim 1, **characterized in that** the counterweight (8) has a thickening (63) increasing the eccentric mass on the side facing away from the cutout (55).

3. The balance shaft unit as claimed in claim 1, which is supported in friction bearings (30) in the balance casing (5), **characterized in that** at least one of the end surfaces (61) of the counterweight (8) forms, jointly with a machined surface (33) of the balance casing (5), a thrust bearing (32).

4. The balance shaft unit as claimed in claim 3, the balance shaft being supported in a balance casing (5) in light metal, **characterized in that** the bearing surfaces (31) of the friction bearing are formed in the balance casing (5) itself.

5. The balance shaft unit as claimed in claim 1, **characterized in that** the counterweight (8) is connected to the balance shaft (6, 7) by a high-energy welded seam (35, 35') in the cutout (55), which high-energy welded seam (35, 35') is produced on both sides at the intersection of the cutout plane (56, 57) with the balance shaft (6, 7).

6. The balance shaft unit as claimed in claim 1, **characterized in that** the balance shaft (6, 7) has at least a first transverse hole (38; 41; 45; 48), which is aligned with at least one second transverse hole (39; 42; 46; 49) of the counterweight (8), which two holes accept an essentially cylindrical connecting element (40;. 43; 47; 50).

7. The balance shaft unit as claimed in claim 6, **characterized in that** the cylindrical connecting element is a bolt (40).

8. The balance shaft unit as claimed in claim 6, **characterized in that** the cylindrical connecting element is a dowel pin (47).

9. The balance shaft unit as claimed in claim 6, **characterized in that** the cylindrical connecting element is a clamping sleeve (50).

10. The balance shaft unit as claimed in claim 6, **characterized in that** the cylindrical connecting element is a rivet.

## Revendications

1. Unité d'arbre d'équilibrage pour machine à combustion interne, laquelle unité est constituée d'au moins un arbre d'équilibrage (6, 7) monté dans un boîtier d'équilibrage (5) et d'au moins un poids d'équilibrage (8) fixé sur l'arbre d'équilibrage, **caractérisée en ce que** le poids d'équilibrage (8) est essentiellement constitué par une bague cylindrique comportant deux faces frontales (61) perpendiculaires à l'axe et une découpe (55) dans la région longitudinale médiane, de sorte que le poids d'équilibrage est constitué de deux parties formant bagues (59,60) raccordées aux faces frontales (61) et d'une partie formant segment intermédiaire (62).

2. Unité d'arbre d'équilibrage selon la revendication 1, **caractérisée en ce que** le poids d'équilibrage (8) comporte, du côté qui est opposé à la découpe (55), un renflement (63) augmentant la masse excentrique.

3. Unité d'arbre d'équilibrage selon la revendication 1, qui est montée dans le boîtier d'équilibrage (5) dans des paliers lisses (30), **caractérisée en ce qu'**au moins l'une des faces frontales (61) du poids d'équilibrage (8) forme, conjointement avec une surface usinée (33) du boîtier d'équilibrage (5), un palier de butée (32).

4. Unité d'arbre d'équilibrage selon la revendication 3, dans laquelle l'arbre d'équilibrage est monté dans un boîtier d'équilibrage (5) en métal léger, **caractérisée en ce que** les surfaces (31) du palier lisse dans le boîtier d'équilibrage (5) ont la même conformation.

5. Unité d'arbre d'équilibrage selon la revendication 1, **caractérisée en ce que** le poids d'équilibrage (8) est relié, dans la découpe (55), à l'arbre d'équilibrage (6, 7) par un cordon de soudure à haute énergie (35, 35') qui est réalisé, des deux côtés, à l'intersection entre le plan (56, 57) de la découpe et l'arbre d'équilibrage (6, 7).

6. Unité d'arbre d'équilibrage selon la revendication 1, **caractérisée en ce que** l'arbre d'équilibrage (6, 7) comporté au moins un premier perçage transversal (38 ; 41 ; 45 ; 48) qui est aligné avec au moins un deuxième perçage transversal (39 ; 42 ; 46 ; 49) du poids d'équilibrage (8), les deux perçages recevant un élément de liaison sensiblement cylindrique (40 ; 43 ; 47 ; 50).

7. Unité d'arbre d'équilibrage selon la revendication 6, **caractérisée en ce que** l'élément de liaison cylindrique est une vis (40).

8. Unité d'arbre d'équilibrage selon la revendication 6, **caractérisée en ce que** l'élément de liaison cylindrique est une goupille de serrage (47).

9. Unité d'arbre d'équilibrage selon la revendication 6, **caractérisée en ce que** l'élément de liaison cylindrique est une douille de serrage (50).

10. Unité d'arbre d'équilibrage selon la revendication 6, **caractérisée en ce que** l'élément de liaison cylindrique est un rivet.
